# EUROPÄISCHE PATENTSCHRIFT

(11) **EP 2 067 424 B1**
(45) Veröffentlichungstag und Bekanntmachung des Hinweises auf die Patenterteilung: **14.03.2012**
(21) Anmeldenummer: 08105736.6
(22) Anmeldetag: 05.11.2008
(51) Int. Cl.: A47J 31/54

(54) **Umschaltbarer elektrischer Durchlauferhitzer**
Switchable electric percolator
Chauffe-eau instantané commutable électrique

(30) Priorität: 05.12.2007 DE 102007058373
(43) Veröffentlichungstag der Anmeldung: 10.06.2009
(73) Patentinhaber: BSH Bosch und Siemens Hausgeräte GmbH, 81739 München (DE)
(72) Erfinder: Hauser, Andreas, 83370 Seeon (DE); Kramer, Siegmund, 83417 Kirchanschöring (DE)

(56) Entgegenhaltungen:
- EP-A- 0 353 425
- DE-U1- 8 708 083

## Beschreibung

Die Erfindung betrifft einen elektrischen Durchlauferhitzer mit einem Durchlaufrohr für eine Flüssigkeit und einer Mehrzahl von am Durchlaufrohr angebrachten, elektrischen Heizungen, die jeweils innerhalb eines separaten Stromkreises angeordnet sind. Außerdem betrifft die Erfindung ein Verfahren zum Erhitzen einer Flüssigkeit mittels eines elektrischen Durchlauferhitzers unter Verwendung einer Mehrzahl von an einem Durchlaufrohr angebrachten elektrischen Heizungen, die jeweils innerhalb eines separaten Stromkreises angeordnet sind.

Elektrische Durchlauferhitzer, speziell bei Anwendungen in Kaffeevollautomaten, werden heute möglichst standardisiert für einen globalen Markt hergestellt. Eine Schwierigkeit für den universalen Einsatz derartiger Durchlauferhitzer besteht darin, dass die Netzspannung von Land zu Land variieren kann. Durch die geringere Netzspannung, beispielsweise in den USA, kann ein für Europa ausgelegter Durchlauferhitzer dort nur eingeschränkt zur Anwendung kommen. Für Länder mit niedrigen Netzspannungen sind daher elektrische Kleingeräte mit eigens dafür angepassten Durchlauferhitzern nötig.

Die DE 38 25 166 C2 schlägt u. a. einen Durchlauferhitzer mit zwei Heizungen vor, die über einen Schalter in Reihe oder parallel zueinander oder einzeln unabhängig geschaltet sind. Bei Betrieb in einem System mit etwa 220 V werden die beiden Heizungen hintereinander geschaltet, während sie bei einem Betrieb mit 110 V parallel geschaltet sind. Dieses Schaltungssystem stößt jedoch auf technische Grenzen, so dass eine zügige und ausreichende Erhitzung insbesondere von sehr kaltem Wasser nicht unter allen Umständen gegeben ist.

Aufgabe der vorliegenden Erfindung ist es daher, einen verbesserten elektrischen Durchlauferhitzer bereitzustellen, der insbesondere für einen Betrieb unterhalb von 200 V Netzspannung ausgelegt ist und auch unter diesen Umständen verlässlich Heißwasser in einem gewünschten Temperaturumfang liefert.

Diese Aufgabe wird erfindungsgemäß gelöst durch einen elektrischen Durchlauferhitzer der eingangs genannten Art, der einen Aktuator aufweist, der die Heizungen im Betrieb abwechselnd in einem Umschaltungstakt mit Heizstrom versorgt. Ein derartiger Durchlauferhitzer ist also umschaltbar von einer ersten Heizung zu weiteren Heizungen, wobei sichergestellt ist, dass immer nur eine Heizung zu einem gegebenen Zeitpunkt mit Strom versorgt wird. Der Umschaltungstakt ist dabei nicht notwendigerweise gleichförmig, sondern kann den betrieblichen Gegebenheiten durch Variierung der Anschaltzeit der Heizung angepasst werden. Als Aktuator kann beispielsweise ein Schalter dienen, der automatisiert umgeschaltet wird. Zwar ist auch eine manuelle Umschaltung prinzipiell denkbar, eine automatische bzw. eine halbautomatische Umschaltung des Aktuators ist jedoch vorzuziehen, da sie für einen Benutzer eine deutliche Erhöhung des Komforts bietet.

Der Einfachheit halber besonders bevorzugt werden genau zwei Heizungen am Durchlaufrohr innerhalb des Durchlauferhitzers angeordnet. Sie können dann alternierend betrieben werden. Ein einfacher Umschaltmechanismus als Aktuator ermöglicht die abwechselnde Versorgung der Heizungen mit Heizstrom. Vorteilhafterweise ist es u. a. möglich, durch einfache Wechselschaltungen einen derartigen Betrieb zu gewährleisten.

Gemäß einer weiteren vorteilhaften Ausführungsform der Erfindung umfasst der Aktuator mindestens zwei Halbleiterrelais. Sie können so ausgelegt sein, dass sie im Wechselstrombetrieb nur Strom durchleiten, der in eine Richtung gepolt ist, während der in die andere Richtung fließende Strom sie nicht passieren kann. Zwei Halbleiterrelais können also entgegengesetzt gepolt sein, so dass ein Halbleiterrelais in die eine Richtung und ein anderes Halbleiterrelais in die andere Richtung Strom leitet und dadurch über jedes Halbleiterrelais jeweils eine halbe Phase des Wechselstroms fließt, während die andere halbe Phase vom anderen Halbleiterrelais bedient wird.

Gemäß einer weiteren vorteilhaften Ausführungsform weist ein erfindungsgemäßer Durchlauferhitzer einen programmbasierten Aktuator auf. Darunter sind einerseits solche zu verstehen, die auf Basis eines Rechenprogramms funktionieren, das mit Hilfe elektronischer Chipbausteine durchgeführt wird. Andererseits sind auch Aktuatoren verwendbar, deren Umschaltmechanismus auf einem vorab bestimmten Logikprinzip basiert. Beispielsweise können auch Relais oder automatisch betriebene Wechselschalter als programmbasierte Aktuatoren verstanden werden. Programmbasierte Aktuatoren haben u. a. den Vorteil, dass sie deutlich fehlerunanfälliger gestaltbar sind als nicht programmbasierte Aktuatoren. Dadurch kann insbesondere gewährleistet werden, dass immer nur eine Heizung des elektrischen Durchlauferhitzers angeschaltet ist.

Die erfindungsgemäße Lösung zielt insbesondere darauf ab, dass der Wirkungsgrad des Durchlauferhitzers mit Hilfe des umschaltbaren Aktuators erhöht wird. Daher ist der Aktuator bevorzugt so ausgebildet, dass der Umschaltungstakt kürzer ist als eine Zeit, die für eine Wärmeübertragung von einer wärmeabgebenden Oberfläche der Heizung an die Flüssigkeit im Durchlaufrohr benötigt wird. Der Umschaltungstakt ist also kürzer als eine Zeit, die für die Weiterleitung von einem Wärmespeicher zwischen einer wärmeabgebenden Oberfläche der Heizungen und einer flüssigkeitsberührten Innenfläche des Durchlaufrohrs aufgrund eines durch den Heizstrom hervorgerufenen Wärmeeintrags in die Flüssigkeit im Durchlaufrohr benötigt wird. Jedes zwischen der Heizung bzw. den Heizungen und der flüssigkeitsberührten Innenfläche des Durchlaufrohrs befindliche Material wirkt als Wärmespeicher. Ein solcher Wärmespeicher besteht typischerweise mindestens aus dem Durchlaufrohr selbst und der die Heizungen umgebenden Einhausungen. Beide bestehen üblicherweise aus Aluminium oder Aluminiumverbindungen und wirken wärmeleitend in Richtung der flüssigkeitsberührten Innenfläche des Durchlaufrohrs. Aufgrund ihrer Speicherfähigkeit verzögern sie jedoch auch den Wärmeeintrag in die Flüssigkeit im Durchlaufrohr.

Durch den Wärmespeicher kann eine Verzögerung des Wärmeeintrags in die Flüssigkeit im Durchlaufrohr von beispielsweise mindestens 0,25 Sek. Erreicht werden. Dadurch heizt sich der Wärmespeicher aufgrund des Heizeintrags aller Heizungen gleichmäßiger auf. Der Aktuator kann bei der abwechselnden Versorgung der Heizungen mit Heizstrom in einem Takt kleiner oder gleich eine Sekunde umschalten. Im Zusammenwirken mit dem Wärmespeicher wird also zuerst der Wärmespeicher von der Heizung aufgeheizt und erst nach Umschalten durch den Aktuator auf eine andere Heizung Wärme von der ersten aktivierten Heizung abgegeben wird. Während dieser Wärmeabgabe trägt bereits die nächste Heizung Wärme in den Wärmespeicher ein

In einer weiteren vorteilhaften Ausführungsform ist zwischen den Heizungen und einer flüssigkeitsberührten Innenfläche des Durchlaufrohrs ein Wärmespeicher-Verstärkungselement angebracht. Als Wärmespeicher-Verstärkungselemente sind all jene Aggregate zu verstehen, die eine Materialkonzentration - zusätzlich zum Material der Einhausung der Heizungen und zum Durchlaufrohr - zwischen der Heizung und der Innenseite des Durchlaufrohrs bewirken. Sie dienen dazu, Wärme zusätzlich vor Abgabe an die Flüssigkeit zu speichern und somit zu einer verzögerten Aufheizung der Flüssigkeit beizutragen.

Außerdem wird die eingangs genannte Aufgabe gelöst durch einen Kaffeevollautomaten mit einem erfindungsgemäßen Durchlauferhitzer und durch ein Verfahren zum Erhitzen einer Flüssigkeit mittels eines elektrischen Durchlauferhitzers unter Verwendung einer Mehrzahl von an einem Durchlaufrohr angebrachten elektrischen Heizungen, die je innerhalb eines separaten Stromkreises angeordnet sind, wobei die Heizungen im Betrieb abwechselnd mit Heizstrom versorgt werden. Es ergibt sich ein Effekt, bei dem der Wirkungsgrad der beiden Heizungen erhöht wird und bei dem der Wärmeeintrag in die Flüssigkeit ähnlich effektiv erfolgt, wie wenn beide Heizungen gleichzeitig betrieben würden.

Gemäß einer weiteren vorteilhaften Ausführungsform eines erfindungsgemäßen Kaffeevollautomaten weist dieser eine Netzspannungs-Umschaltvorrichtung zum Umschalten zwischen einer Netzspannung von über 200 V auf eine Netzspannung unter 200 V auf. Ein derartiger Kaffeevollautomat kann universal in verschiedenen Ländern eingesetzt werden. Die Netzspannungs-Umschaltvorrichtung kann u. a. gewährleisten, dass alle elektrischen und elektronischen Elemente des Kaffeevollautomaten sowohl bei einer Netzspannung von über 200 V als auch bei einer Netzspannung von unter 200 V betrieben werden können. Sie umfasst daher insbesondere Transformatoren und/oder weitere Schalter. Letztere können von für eine Netzspannung über 200 V geeigneten elektronischen und/oder elektrischen Elementen auf solche Elemente umschalten, die bei einer Netzspannung unter 200 V betrieben werden können. Die Netzspannungs-Umschaltvorrichtung kann weiterhin bewirken, dass bei einer Netzspannung von über 200 V die Heizungen des Durchlauferhitzers parallel gleichzeitig betrieben werden oder jeweils einzeln. Bei einer Netzspannung unter 200 V wird dann auf den Betrieb mittels eines Aktuators mit abwechselnder Versorgung der Heizungen in einem Umschalttakt umgestellt.

Gemäß einer vorteilhaften Ausführungsform des erfindungsgemäßen Verfahrens wird bei einem Betrieb mit einer Netzspannung unter 200 V mindestens eine der Heizungen mit der gesamten verfügbaren Leistung einer an den Durchlauferhitzer angeschlossenen Stromquelle versorgt. Die weiteren Heizungen des Durchlauferhitzers können entweder ebenfalls mit der gesamten verfügbaren Leistung versorgt werden oder bedarfsabhängig mit verminderter Heizleistung. Der Betrieb mindestens einer der Heizungen unter Volllast gewährleistet, dass für diese Heizung keine zusätzliche Regelung der Heizleistung notwendig wird, sondern dass die Regelung des Leistungseintrags allein durch Regelung der anderen Heizungen erfolgt.

Für die Anordnung der Heizungen des Durchlauferhitzers zueinander sind verschiedene vorteilhafte Ausführungen möglich. So können zwei Heizungen am Durchlaufrohr gegenüberliegend angeordnet sein, oder die Heizungen werden im Bereich des Durchlaufrohrs ineinandergreifend angeordnet. Beispielsweise kann dies durch mäanderartige oder kammartige Anordnungen erfolgen. Ziel der jeweiligen Anordnung ist ein möglichst gleichmäßiger Wärmeeintrag in Richtung der Innenseite des Durchlaufrohrs, um dadurch einen möglichst hohen Wirkungsgrad zu erreichen.

Das Prinzip der Erfindung wird im Folgenden anhand einer Zeichnung beispielshalber noch näher erläutert.

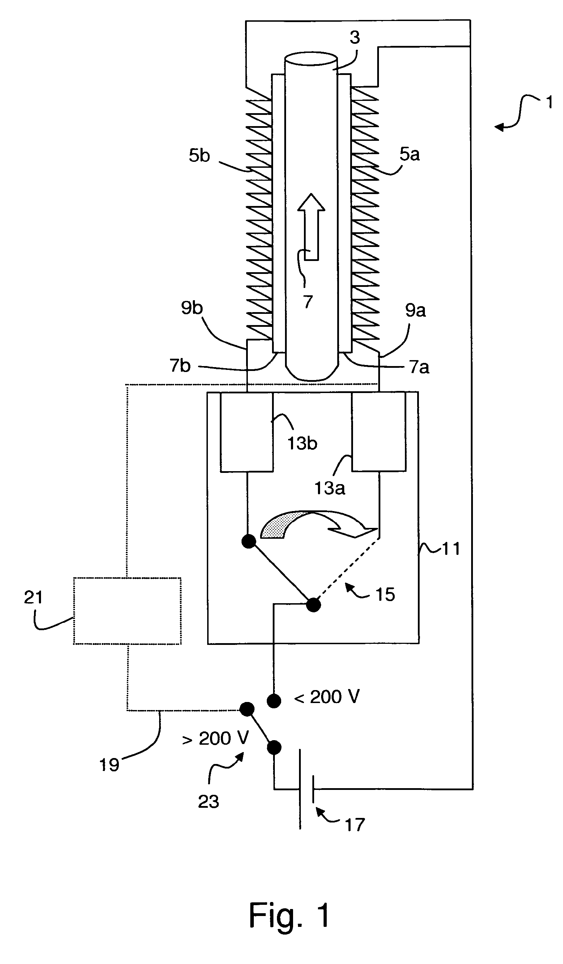

Figur 1 zeigt eine schematische Darstellung eines elektrischen Durchlauferhitzers und verschiedener, für seinen Betrieb notwendiger Steuerungselemente.

Ein elektrischer Durchlauferhitzer 1 besteht aus einem Durchlaufrohr 3 und zwei Heizungen 5a, 5b. Zwischen den Heizungen 5a, 5b und dem Durchlaufrohr 3 sind Wärmespeicher-Verstärkungselemente 7a, 7b angebracht. Jede der beiden Heizungen 5a, 5b ist innerhalb eines separaten Stromkreises 9a, 9b angeordnet. Die separaten Stromkreise 9a, 9b verbinden jede Heizung 5a, 5b unabhängig voneinander mit einer Stromquelle 17 und einem Aktuator 11. Der Aktuator 11 besteht aus einem Wechselschalter 15 und zwei Halbleiterrelais 13a, 13b. Die Halbleiterrelais 13a, 13b dienen der Steuerung der Stromversorgung für die beiden Heizungen 7a, 7b. Sie steuern insbesondere die Stromstärke, die in die Heizungen 5a, 5b eingetragen wird. Der Wechselschalter 15 schaltet abwechselnd zwischen den beiden Heizungen 5a, 5b. Hierdurch ist gewährleistet, dass immer nur entweder die erste Heizung 5a oder die zweite Heizung 5b mit Strom versorgt wird. Weitere Steuerungselemente innerhalb des Aktuators 11 (hier nicht dargestellt) können beispielsweise der Transformation von Spannung aus der Stromquelle 17 dienen oder weitere Steuerungsfunktionen bedienen. Des Weiteren ist eine Netzspannungs-Umschaltvorrichtung 23 dargestellt. Sie ist in Form eines Wechselschalters ausgeführt. Bei einer Spannung der Stromquelle 17 von unterhalb 200 V wird der Stromkreis von der Spannungsquelle 17 über den Aktuator 11 zu den beiden Heizungen 5a, 5b geführt. Bei einer Spannung von mehr als 200 V wird ein alternativer Stromkreis 19 aktiviert, innerhalb dessen die Heizungen 5a, 5b parallel geschaltet betrieben werden und von einem Regler 21 geregelt sind.

Mit Hilfe des dargestellten Aufbaus ist es möglich, zwischen einem Netzspannungsbetrieb von über 200 V und einem Netzspannungsbetrieb von unter 200 V zu wechseln und je nach Spannung unterschiedliche Stromkreisläufe zu betreiben. Für den Stromkreis für einen Betrieb unter 200 V Netzspannung gilt folgender Betriebsablauf: Durch den wechselnden Betrieb der Heizungen 5a, 5b, die durch Umschalten des Wechselschalters 15 abwechselnd angesteuert werden, ist es möglich, über die Wärmespeicher-Verstärkungselemente 7a, 7b Wärme in das Durchlaufrohr einzutragen, wodurch eine Flüssigkeit F, welche in dargestellter Durchlaufrichtung das Durchlaufrohr 3 durchläuft, erhitzt wird.

Die Wärmespeicher-Verstärkungselemente 7a, 7b sowie das Durchlaufrohr 3 wirken als Wärmespeicher für die Wärme, die durch die Heizungen 5a, 5b erzeugt wird. Somit ergibt sich ein verzögerter Wärmeeintrag in die Flüssigkeit F im Durchlaufrohr 3. Zunächst wird der Wärmespeicher erhitzt, bevor ein Wärmeeintrag in die Flüssigkeit F erfolgt. Durch die Wärmespeicherung entsteht ein Effekt, als würden beide Heizungen gleichzeitig betrieben. Es wird erreicht, dass die wechselseitig betriebenen Heizungen 5a, 5b bei einem Betrieb mit niedriger Netzspannung unter 200 V ausreichend Wärme erzeugen können, die in der Folge in die Flüssigkeit F eingetragen wird. Die Anordnung mit Heizungen 5a, 5b, den Wärmespeicher-Verstärkungselementen 7a, 7b und dem Durchlaufrohr 3, verbunden mit dem wechselseitigen Betrieb der Heizungen 5a, 5b, dient also dazu, eine optimale Ausnutzung der Heizleistung beider Heizungen 5a, 5b zu gewährleisten, und dadurch einen erhöhten Wirkungsgrad zu erreichen.

Im Betrieb des Durchlauferhitzers mit einer Netzspannung der Stromquelle 17 über 200 V ist eine derartige Steuerung der Heizungen 5a, 5b nicht notwendig, weshalb unter diesen Umständen der alternative Stromkreis 19 aktiviert werden kann.

Da es sich bei der vorhergehenden detailliert beschriebenen Anordnung um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Heizungen in anderer Form als der hier beschriebenen erfolgen. Ebenso kann der Aktuator in einer anderen Form ausgestaltet werden, wenn dies beispielsweise aus Schaltungsgründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Durchlauferhitzer
- 3: Durchlaufrohr
- 5a, 5b: Heizungen
- 7a, 7b: Wärmespeicher-Verstärkungselemente
- 9a, 9b: Stromkreise
- 11: Aktuator
- 13a, 13b: Halbleiterrelais
- 15: Wechselschalter
- 17: Stromquelle
- 19: alternativer Stromkreis
- 21: Regler
- 23: Umschaltvorrichtung

- F: Flüssigkeit

## Patentansprüche

1. Elektrischer Durchlauferhitzer (1) mit einem Durchlaufrohr (3) für eine Flüssigkeit (F) und einer Mehrzahl von am Durchlaufrohr (3) angebrachten, elektrischen Heizungen (5a; 5b), die je innerhalb eines separaten Stromkreises (9a; 9b) angeordnet sind, **gekennzeichnet durch** einen Aktuator (11), der die Heizungen (5a; 5b) im Betrieb abwechselnd in einem Umschaltungstakt mit Heizstrom versorgt.

2. Durchlauferhitzer gemäß Anspruch 1, **gekennzeichnet durch** zwei Heizungen (5a; 5b) am Durchlaufrohr (3).

3. Durchlauferhitzer gemäß Anspruch 1 oder 2, **dadurch gekennzeichnet, dass** der Aktuator (11) mindestens zwei Halbleiterrelais (13a, 13b) umfasst.

4. Durchlauferhitzer gemäß einem der vorhergehenden Ansprüche, **gekennzeichnet durch** einen programmbasierten Aktuator (11).

5. Durchlauferhitzer gemäß einem der vorhergehenden Ansprüche, **dadurch gekennzeichnet, dass** der Aktuator (11) so ausgebildet ist, dass der Umschaltungstakt kürzer ist als eine Zeit, die für eine Wärmeübertragung von einer Wärme abgebenden Oberfläche der Heizungen (5a; 5b) an die Flüssigkeit (F) im Durchlaufrohr (3) benötigt wird.

6. Durchlauferhitzer gemäß einem der vorhergehenden Ansprüche, **gekennzeichnet durch** mindestens ein Wärmespeicher-Verstärkungselement (7a; 7b), das zwischen den Heizungen (5a; 5b) und einer flüssigkeitsberührten Innenfläche des Durchlaufrohrs (3) angebracht ist.

7. Kaffee-Vollautomat mit einem Durchlauferhitzer (1) gemäß einem der vorhergehenden Ansprüche.

8. Kaffee-Vollautomat gemäß Anspruch 7, **gekennzeichnet durch** eine Netzspannungs-Umschaltvorrichtung (23) zum Umschalten zwischen einer Netzspannung von über 200V auf eine Netzspannung unter 200V.

9. Verfahren zum Erhitzen einer Flüssigkeit (F) mittels eines elektrischen Durchlauferhitzers (1) unter Verwendung einer Mehrzahl von an einem Durchlaufrohr (3) angebrachten elektrischen Heizungen (5a; 5b), die je innerhalb eines separaten Stromkreises (7a; 7b) angeordnet sind, **dadurch gekennzeichnet, dass** die Heizungen (5a; 5b) im Betrieb abwechselnd mit Heizstrom versorgt werden.

10. Verfahren gemäß Anspruch 9, **dadurch gekennzeichnet, dass** mindestens eine der Heizungen (5a; 5b) mit gesamter verfügbarer Leistung einer an den Durchlauferhitzer (1) angeschlossenen Stromquelle (17) versorgt wird.

## Claims

1. Electric throughflow heater (1) with a throughflow pipe (3) for a liquid (F) and a plurality of heaters (5a; 5b) which are mounted at the throughflow pipe (3) and which are each arranged within a separate circuit (9a; 9b), **characterised by** an actuator (11) which in operation supplies the heaters (5a; 5b) in alternation with heating current in a switch-over cycle.

2. Throughflow heater according to claim 1, **characterised by** two heaters (5a; 5b) at the throughflow pipe (3).

3. Throughflow heater according to claim 1 or 2, **characterised in that** the actuator (11) comprises at least two semiconductor relays (13a, 13b).

4. Throughflow heater according to any one of the preceding claims, **characterised by** a program-based actuator (11).

5. Throughflow heater according to any one of the preceding claims, **characterised in that** the actuator (11) is so constructed that the switch-over cycle is shorter than a time which is needed for heat transmission from a heat-delivery surface of the heaters (5a; 5b) to the liquid (F) in the throughflow pipe (3).

6. Throughflow heater according to any one of the preceding claims, **characterised by** at least one heat store reinforcing element (7a; 7b) mounted between the heaters (5a; 5b) and a liquid-contacted inner surface of the throughflow pipe (3).

7. Automatic coffee machine with a throughflow heater (1) according to any one of the preceding claims.

8. Automatic coffee machine according to claim 7, **characterised by** a mains voltage switching-over device (23) for switching over between a mains voltage of over 200 V and a mains voltage of below 200 V.

9. Method of heating a liquid (F) by means of an electric throughflow heater (1) with use of a plurality of electric heaters (5a; 5b), which are mounted at a throughflow pipe (3) and which are each arranged within a separate circuit (7a; 7b), **characterised in that** in operation the heaters (5a; 5b) are supplied with heating current in alternation.

10. Method according to claim 9, **characterised in that** at least one of the heaters (5a; 5b) is supplied with the total available power of a power source (17) connected with the throughflow heater (1).

## Revendications

1. Chauffe-eau instantané électrique (1) comprenant un tube de passage (3) pour un liquide (F) et une pluralité de chauffages électriques (5a; 5b) installés sur le tube de passage (3), lesquels sont chacun disposés à l'intérieur d'un circuit de courant séparé (9a ; 9b), **caractérisé par** un actionneur (11) qui en fonctionnement alimente en courant de chauffage les chauffages (5a ; 5b) par alternance, selon un rythme de commutation.

2. Chauffe-eau instantané selon la revendication 1, **caractérisé par** deux chauffages (5a ; 5b) sur le tube de passage (3).

3. Chauffe-eau instantané selon la revendication 1 ou 2, **caractérisé en ce que** l'actionneur (11) comprend au moins deux relais à semi-conducteur (13a, 13b).

4. Chauffe-eau instantané selon l'une quelconque des revendications précédentes, **caractérisé par** un actionneur (11) basé sur un programme.

5. Chauffe-eau instantané selon l'une quelconque des revendications précédentes, **caractérisé en ce que** l'actionneur (11) est réalisé de manière à ce que le rythme de commutation soit plus court qu'un temps qui est nécessaire dans le tube de passage (3) pour un transfert de chaleur d'une surface des chauffages (5a ; 5b), dégageant de la chaleur, au liquide (F).

6. Chauffe-eau instantané selon l'une quelconque des revendications précédentes, **caractérisé par** au moins un élément de renforcement de l'accumulateur de chaleur (7a ; 7b) qui est installé entre les chauffages (5a ; 5b) et une surface intérieure, en contact avec le liquide, du tube de passage (3).

7. Machine à café automatique comprenant un chauffe-eau instantané (1) selon l'une quelconque des revendications précédentes.

8. Machine à café automatique selon la revendication 7, **caractérisée par** un dispositif de commutation de tension de réseau (23) destiné à commuter entre une tension de réseau supérieure à 200 V et une tension de réseau inférieure à 200 V.

9. Procédé d'échauffement d'un liquide (F) au moyen d'un chauffe-eau instantané électrique (1) en utilisant une pluralité de chauffages électriques (5a ; 5b) installés sur un tube de passage (3), lesquels sont chacun disposés à l'intérieur d'un circuit de courant séparé (7a ; 7b), **caractérisé en ce qu'**en fonctionnement les chauffages (5a ; 5b) sont alimentés en courant de chauffage par alternance.

10. Procédé selon la revendication 9, **caractérisé en ce qu'**au moins un des chauffages (5a, 5b) est alimenté avec la puissance totale disponible d'une source de courant (17) connectée au chauffe-eau instantané (1).
